# EUROPÄISCHE PATENTSCHRIFT

(11) **EP 0 976 886 B1**
(45) Veröffentlichungstag und Bekanntmachung des Hinweises auf die Patenterteilung: **15.09.2004**
(21) Anmeldenummer: 99114318.1
(22) Anmeldetag: 21.07.1999
(51) Int. Cl.: E04B 7/22, E04D 13/18, E04D 3/35, E04D 13/16, F24J 2/04

(54) **Bau-Element zur Dacheindeckung und/oder Fassadenverkleidung sowie Verfahren zu dessen Herstellung**
Building element for roof and/or façade covering and its manufacturing method
Elément de construction pour revêtement de toiture et/ou de façade et son procédé de fabrication

(30) Priorität: 27.07.1998 CH 158298
(43) Veröffentlichungstag der Anmeldung: 02.02.2000
(73) Patentinhaber: Viol, Ingeborg, 9410 Heiden (CH)
(72) Erfinder: Viol, Günther, Dipl.-Ing., 9410 Heiden (CH)
(74) Vertreter: Römpler, Aldo

(56) Entgegenhaltungen:
- DE-A- 2 912 046
- DE-A- 3 121 849
- DE-A- 3 229 208
- DE-U- 9 419 045
- GB-A- 2 318 595
- NL-A- 9 200 536
- US-A- 4 201 194
- US-A- 4 291 683
- US-A- 4 331 503
- US-A- 5 338 369

## Beschreibung

Die vorliegende Erfindung betrifft ein Bau-Element zur Dacheindeckung und/oder Fassadenverkleidung, welches wärmedämmend ausgebildet ist, indem es aus wärmedämmendem Material besteht oder wärmedämmendes Material enthält, wobei unterhalb seiner nach aussen zu richtenden Oberfläche mindestens ein Kanal verläuft, der zum Führen von Luft bestimmt ist, welcher Kanal so ausgebildet ist dass die Luft zu Heiz- und/oder Kühlzwecken abgeführt werden kann.

Ein soches Bau-Element ist z.B. aus der NL-A-9 200 536 bekannt. Weiter betrifft die Erfindung ein Verfahren zur Herstellung dieses Bau-Elementes.

Durch den Erlass der europaweit gültigen Wärme-Dämm-Verordnung wurde ein Wärmedämmung auf dem Dach, Wänden und Boden jeden Neubaus zwingend vorgeschrieben. Es entstanden eine Fülle von organischen und anorganischen Wärme-Dämm-Materialien, meist als Schaum. Diese Stoffe oder daraus hergestellte Formkörper oder Platten werden vorzugsweise aussen oder auch innen an einem Bauwerk angebracht, um die Abstrahlung der Wärme im Bau zu mindern.

Bekannt ist ausserdem - zusätzlich zu einer möglichst optimalen Wärme-Dämmung - eine Sonnen-Kollektoranlage zu installieren, welche die Nutzung der Sonnen- bzw. Umgebungswärme ermöglicht. In den zumeist verwendeten Flachkollektoren zirkuliert eine Wärmeträger-Flüssigkeit, d.h. ein Wasser-Glykol-Gemisch, die dem Kollektor die Wärme entzieht. Diese Wärmeträger-Flüssigkeit dient als Zwischenleiter. Sie transportiert die gewonnene Energie im geschlossenen Kollektor-Kreislauf zu einem Wärmetauscher, der die Wärme an einen Speicher oder an das Heizsystem abgibt. Neben einer ganzen Reihe verschiedener Nachteile einer derartigen Kollektoranlage, ist hierbei ein doppelter Aufwand erforderlich: Erstens eine Wärme-Dämmung, zweitens ein Wärme-Nutzungssystem.

Aus der Niederländischen Patentanmeldung NL 9 200 536 A sind vorgefertigte isolierende Paneele bekannt, die mindestens zwei Schichten aufweisen, eine isolierende Innenschicht und eine der Verkleidung dienende Aussenschicht. Die isolierende Schicht kann aus einer Lage aus Polyurethanschaum bestehen. Zwischen den beiden Schichten können Luft führende Kanäle vorhanden sein. Der hauptsächliche Zweck dieser Paneele ist es ein Dach herstellen zu können, der optisch einem Reetdach entspricht, wozu die Aussenschicht bildende Reethalme derart in die isolierende Polyurethanschicht eingesteckt sind, dass sie aus dieser herausragen.

Das Deutsche Gebrauchsmuster DE 94 19 045 U offenbart ein stabförmiges, im Querschnitt dreieckiges Wandelement, das zur Aussenseite hin ein offenes, d.h. eine Ausnehmung bildendes Querschnittsprofil aufweist. Aus statischen Gründen kann die beabsichtigte Konstruktion aus einer Kombination von zwei Wandelementen verschiedenen Materials hergestellt werden: Ein erstes, statisch wirksames Wandelement aus Beton und ein zweites, isolierendes Wandelement, das aus einem Schaumstoff besteht, vorzugsweise aus einem Geopolymer-Schaumstoff. Diese beiden Bauelemente können entlang ihrer aneinander liegenden Seitenflächen miteinander verklebt werden. Alternativ können dort, wo geringere statische Ansprüche gestellt werden, beziehungsweise dort, wo Beton infolge seines hohen Gewichtes unbrauchbar ist, nur Schaumstoff-Bauteile verwendet werden. Zur statischen Verstärkung des Schaumstoffes können in diesem Fall behelfsmässig Stahlrohre eingezogen werden, wobei die Möglichkeit besteht, diese Stahlrohre als Medienleitungen oder als Schutzrohre für elektrische Leitungen zu verwenden. Die Aussenseite der Bauelemente kann mit einer Schutzbeschichtung versehen sein.

In der Britischen Patentanmeldung GB 2 318 595 A ist eine zweischichtige, auf dem Dachstuhl zu befestigende, plattenförmige Tragkonstruktion für Dachziegel beschrieben, bei der eine isolierende Kernplatte, z.B. aus geschäumtem Glas, mit einer Schutzschicht aus Kunststoff versehen ist, vorzugsweise aus GFK. An der Oberfläche dieser Tragkonstruktion sind zum Einhängen der Dachziegel Rillen ausgeformt. Es wird hier also kein eigentliches Bau-Element zur Dacheindeckung und/oder Fassadenverkleidung beschrieben. Eine Wärmegewinnung ist ebenfalls nicht vorgesehen. Zur Befestigung dieser Tragkonstruktions-Platten untereinander sind Bohrlöcher vorhanden, in die offenbar zapfenartige Befestigungsmittel einsteckbar sind. Die Oberfläche weist zudem eine U-förmige Entwässerungsrinne auf, um allenfalls durchgedrungene Feuchtigkeit abzuleiten.

Dieser Stand der Technik vermag, soweit überhaupt ein wärmedämmendes und zur Energiegewinnung oder Kühlung einsetzbares Bau-Element zur Dacheindeckung und/oder Fassadenverkleidung offenbart wird, nicht zu befriedigen. Sei es zunächst schon aus mangelhafter statischer Festigkeit oder wegen eines zu hohen Gewichtes. Vor allem aber infolge eines ungenügenden Wirkungsgrades. Hierzu ist der scheinbare Widerspruch zu überwinden, einerseits die Wärme hereinzulassen und andererseits vor allem von innen nach aussen eine möglichst hohe Dämmung zu erreichen. Nicht zuletzt sollte das Bau-Element möglichst unbrennbar sein und im Brandfalle nicht gasen. Es liegt unter diesen Voraussetzungen auf der Hand, dass im vorliegenden Fall weder das Paneel nach NL 9 200 536 A noch das Wandelement nach DE 9419 045 U zu befriedigen vermögen.

Die Erfindung stellt sich die Aufgabe, ein Bau-Element zu schaffen, welches als Dacheindeckungs- und/oder Fassadenverkleidungs-Element einsetzbar ist und durch welches die Umgebungstemperatur auf einfache aber wirksame Weise zu Heiz- und/oder Kühlungszwecken nutzbar gemacht werden kann. Durch dieses Bau-Element soll ausserdem eine optimale Wärmedämmung sichergestellt werden können. Zweck der Erfindung ist darüber hinaus ein Verfahren zur Herstellung dieses Bau-Elementes anzugeben.

Die gestellte Aufgabe wird erfindungsgemäss durch ein Bau-Element mit den Merkmalen des Patentanspruchs 1 gelöst. Das entsprechende Herstellung-Verfahren geht aus Patentanspruch 8 hervor. Weitere vorteilhafte Ausbildungen des Erfindungsgegenstandes sind aus den abhängigen Patentansprüchen ersichtlich.

Die Erfindung geht von der Erkenntnis aus, dass aussen angebrachte erfindungsgemässe Bau-bzw. Wärme-Dämm-Platten, insbesondere solche aus dem Schaumglas, das unter dem Handelsnamen Millcell bekannt ist, die einfallende Sonnen-Wärme nicht reflektieren, sondern aufsaugen, aber nicht weiterleiten. Millcell ist ein aus Deponie-Altglas, energiearm hergestelltes Schaumglas. Dieses anorganische Material ist geschlossenzellig, verdichtbar und statisch belastbar. Vorzugsweise wird dieses Schaumglas in Schotter-, bzw. Splittform in ein organisches oder anorganisches Bindemittel eingebettet und verdichtet.

Wie Messungen ergeben haben, speichert sich im derart hergestellten Bau-Element die Sonnen-Wärme, aufgrund des hohen Wärme-Dämmvermögens, in den oberen 15 mm an. Diese Wärme kann später ungenutzt an die dann kältere Umgebung abgestrahlt werden oder aber, wie hier vorgesehen, mit wenig Aufwand einer sinnvollen Nutzung zugeführt werden.

Nachfolgend wird ein bevorzugtes Ausführungsbeispiel des Erfindungsgegenstandes anhand der Zeichnung näher beschrieben.
- Fig. 1: zeigt eine schematische Ansicht eines plattenförmigen Bau- und Wärme-Dämm-Elementes;
- Fig. 2: zeigt einen gegenüber Fig. 1 vergrösserten Ausschnitt;
- Fig. 3: zeigt einen Längsschnitt durch zwei miteinander verbundene Bau-Elemente, einschliesslich zweier Endstücke.

Das Bau-Element 1 - das gleichzeitig als Wärme-Dämm-Element dient - ist plattenförmig, beispielsweise mit einer Dicke von 15-20 cm, und kann in beliebiger Länge und Breite angeboten werden. Dieses Bau-Element 1 ist zur Dacheindeckung und/oder Fassadenverkleidung gedacht. Es ist vorzugsweise auf der Basis des unter dem Namen Millcell bekannten Schaumglases hergestellt. Das Schaumglas ist geschlossenzellig und hier in Splitt- und/oder Schotterform vorgesehen, wobei die Schaumglas-Stücke 2 in einer als Bindemittel 3 dienenden Masse eingegossen sind. Vorzugsweise enthält das Bau-Element 1 wesentlich mehr Schaumglas-Stücke 2, als in der Zeichnung angedeutet. Die Dicke des Bau-Elementes 1 richtet sich insbesondere nach der angestrebten Wärmedämmung. Um den derzeit gesetzlich vorgeschriebenen Wärme-Durchgangswert K 0.3 zu erreichen, wird eine Dicke von 15 cm benötigt. Bei einer solchen von 20 cm wird bereits ein Wärme-Durchgangswert K 0.2 erzielt.

Annähernd 5 mm unter der nach aussen zu richtenden Oberfläche 4 des plattenförmigen Bau-Elementes 1 ist eine Mehrzahl von Kanälen 5 angeordnet. Wie aus der Zeichnung ersichtlich, verlaufen diese Kanäle 5 parallel zueinander durch das ganze Bau-Element 1 hindurch und münden jeweils an zwei einander gegenüberliegenden Stirnseiten 6 bzw. 7 am Rand des Bau-Elementes 1. Zur Erhöhung der Platten-Belastbarkeit von der Oberfläche 4 her, bei gleichzeitiger Erhöhung der Kanal-Wandfläche, sind die Kanäle 5 im vorliegenden Beispiel mit dreieckigem Querschnitt ausgebildet, wobei eine Spitze zur Oberfläche 4 hin gerichtet ist Die Ecken sind vorzugsweise abgerundet Auch ein trapezförmiger Querschnitt ist denkbar, wie jeder beliebige andere eckige oder runde Querschnitt.

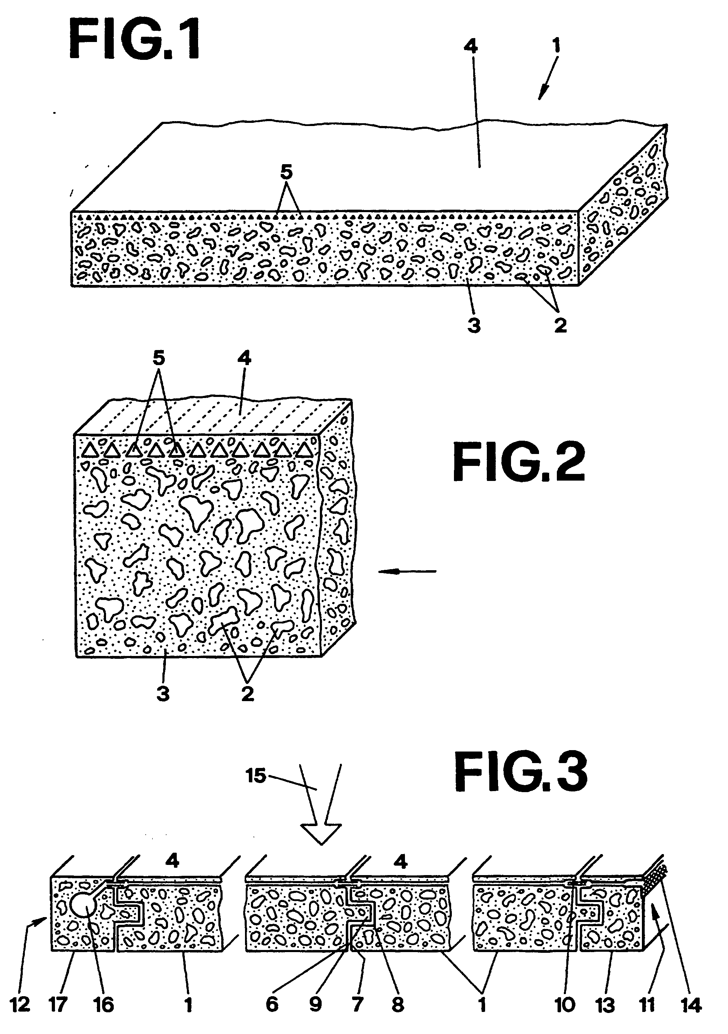

Um eine Mehrzahl von plattenförmigen Bau-Elementen 1 miteinander zu verbinden, sind diese gemäss Fig. 3 vorzugsweise an einander gegenüberliegenden Stirnseiten 6 bzw. 7 mit einer Nut 8 oder einer Feder 9 versehen. Hierdurch ist auch sichergestellt, dass die Enden der Kanäle 5 zweier benachbarter Bau-Elemente 1 genau aufeinander liegen, so dass sich jeweils eine durchgehende Leitung ergibt. Die Kanäle 5 weisen an ihren beiden Enden vorteilhaft jeweils einen vergrösserten Querschnitt auf, so dass Anschluss-Stücke oder Verbindungs-Muffen 10 einsteckbar sind, ohne dass der Kanal-Querschnitt verringert wird. Verbindungs-Muffen 10 sind insbesondere dort sinnvoll, wo die einzelnen Bau-Elemente 1 mittels einer Dichtungsmasse miteinander verklebt werden. Ein Zukleben der Kanäle 5 wird dadurch vermieden. Mittels einer Mehrzahl von miteinander verbundenen Bau-Elementen 1 kann nun ein Dach gedeckt und/oder isoliert werden. Dies funktioniert sowohl auf Schrägdächern, auf Walmdächern als auch auf Flachdächern. Selbst Gründächer könnten verlegt werden. Bei einem Schrägdach befindet sich in der Darstellung gemäss Fig. 3 das untere Ende 11 rechts und das obere Ende 12 links. Auf entsprechende Weise können auch Fassaden verkleidet und/oder isoliert werden. Dadurch erbeben sich grosse Flächen zur Wärmegewinnung.

Durch die Öffnungen am einen bzw. unteren Ende 11 strömt Luft in die Vielzahl von Kanälen 5. Vorzugsweise ist hier an die Bau-Elemente 1 ein Endstück 13 angesetzt, wobei die Kanal-Öffnungen durch ein feinmaschiges Sieb oder Vlies 14 geschützt sind. Durch dieses kann zwar Luft angesogen werden aber kein Wasser. Gleichzeitig ist es ein Schutz gegen das Eindringen von Insekten. Die Luft strömt nun dicht unter der Oberfläche 4 durch die Kanäle 5 der Bau-Elemente 1 hindurch bis zum oberen Ende 12. Sie wird dabei dank der durch die Sonnen- oder umgebungswärme 15 aufgeheizten Oberfläche 4 erwärmt. Am oberen Ende 12 wird die erwärmte Luft in einem Sammelkanal 16 gesammelt. Dieser befindet sich vorteilhaft in einem hier anzusetzenden, weiteren Endstück 17. Die Endstücke 13 und 17 können auch entsprechend dem First- und/oder Traufen-Winkel geformt sein. Der Sammelkanal 16 führt über eine Leitung zu einer Wärmepumpe. Alle Kanäle 5 können, dank einem Gebläse, so lange durch einen ständigen Luftstrom mit geringer Saugleistung abgesogen werden, wie sie Wärme aufnehmen. Mittels eines Thermostat-Schalters kann das Gebläse an- oder abgeschaltet werden, je nachdem ob Wärme von aussen zugeführt werden kann bzw. soll oder nicht.

Die Wärme kann direkt zur Raumheizung verwendet oder aber auch zur späteren Nutzung gespeichert werden. Die zuströmende Warmluft kann mittels der Wärmepumpe hochgeheizt und wenn gewünscht auch mit einem Kompressor verdichtet werden, um ein Maximum an zu speichernder Wärme zu erhalten. Zur Speicherung der Wärme oder der Kälte kann ein Festspeicher vorgesehen werden. So kann die Wärme - oder in heissen Gegenden auch die Kälte - monatelang gespeichert und bei Bedarf entnommen werden. Damit ist eine Winterheizung mit der Spätsommerwärme möglich. In Gegenden mit einem starkem Tag/Nacht-Temperaturunterschied kann auf dem gleichen Wege auch die Nachtkälte gewonnen, gespeichert und zur Raum-Kühlung während der heissen Tagesstunden herangezogen werden. Hier ist dieses einfache und preiswerte, auf dem Bau-Element 1 gründende System, also zur günstigen Beeinflussung des Raumklimas sowohl bei Tag zur Kühlung als auch bei Nacht zur Heizung verwendbar.

Die beschriebenen Bau-Elemente 1 werden in einer 6-seitig verschliessbaren Form mit glatten Innenseiten hergestellt. Die Form kann aus Holz, Blech, Kunststoff, usw. sein, wobei die Innenmasse der Grösse der später gewünschten Bau-Elemente 1 entsprechen. An der Stirnseite der Form befindet sich eine Reihe von Löchern. Die Form wird bis auf den Deckel geschlossen, lagenweise mit Schaumglas- bzw. Millcell-Schotter gefüllt und im Verhältnis 1.3 : 1.0 verdichtet. Es wird also am Ende 30% mehr Schaumglas-Schotter in der Form sein als der eigentliche Forminhalt beträgt. Sinnvollerweise wird oben und unten je eine Lage mit feinkörnigem Schaumglas eingefüllt, z.B. mit einer Korngrösse von 2 - 4 mm. So wird oben und unten eine möglichst glatte Oberfläche erzielt. Annähernd 5 mm unter der nach aussen zu richtenden Oberfläche 4 werden im Basis-Abstand von ca 5 mm 3-kantige Metallstäbe mit 10 mm breiten Seitenflächen und gerundeten Kanten eingelegt. Die Länge der Metallstäbe entspricht der Länge der späteren Bau-Elemente 1. Die Metallstäbe werden zuvor mit einem Trennmittel gegen PUR eingestrichen. Danach wird der dazwischen und der darüber liegende Raum mit einer letzten Lage aufgefüllt und verdichtet. Der Deckel der Form wird nun so weit verschlossen, dass noch Luft entweichen kann. Durch die in der Form befindlichen Löcher wird eine oder mehrere Kanülen in der Länge der Platte in die Schaumglas-Füllung eingestochen. Vorteilhaft wird während des Einstechens Pressluft mit geringem Druck durch die Kanülen gedrückt, um das Verstopfen der Kanülen durch Schaumglas zu verhindern. Nach dem Einschieben der Kanülen bis kurz vor die hintere Wand der Form, wird der Deckel fest verschlossen. Danach wird durch die Kanülen z.B. PUR-Schaum in die Schaumglas-Füllung gepresst, wobei die Kanülen langsam aus der Form herausgezogen werden. Alle Zwischenräume zwischen dem Schaumglas-Schotter bzw. den Schaumglas-Körnern werden dabei mit PUR-Schaum ausgefüllt. Wobei gleichzeitig auch die Schotter-Stücke bzw. Körner des Schumglases fest miteinander verbunden werden. Das PUR dient als Bindemittel. Der Deckel der Form kann nun geöffnet und gewartet werden, bis das PUR voll abgebunden ist. Anschliessend können die Seitenwände aufgeklappt und das Bau-Element 1 herausgenommen werden. Nun sind noch die 3-kantigen Metallstäbe herauszuziehen, dann liegt das fertige Bau-Element 1 vor.

Bei Bedarf, beispielsweise wenn unbrennbare Bau-Elemente 1 benötigt werden, kann der Fertigungsvorgang leicht abweichen. Insbesondere wird die Form bei allen nicht von innen nach aussen unter Druckentwicklung aufschäumenden Bindern ohne Deckel verwendet. Es wird nach wie vor lagenweise Schaumglas eingefüllt und verdichtet. Das Bindemittel, z.B. Zement oder Schaumzement, wird jedoch nass oder trocken zwischen jede Lage gegeben. Bei trocken eingebrachten Bindemitteln muss der Aktivator, z.B. Wasser, am Ende des Prozesses zugegeben werden, bei feuchten Bindemitteln ist der Aktivator bereits in der Zugabe enthalten. Ist die geglättete Oberschicht, die in diesem Fall aus einer dünnen Lage aus - auch farbigem - Bindemittel besteht, aufgebracht, muss gewartet werden, bis das Bindemittel abgebunden und ausgehärtet ist. Danach ist das Bau-Element 1 fertig. Ein aus anorganischen Stoffen und anorganischen Bindemitteln hergestelltes Bau-Element 1 ist unbrennbar. Es ist jedoch eine nahezu beliebige Kombination von Lagen bzw. Schichten aus organischem und/oder anorganischem Material und Bindemitteln denkbar.

Wird als Bindemittel 3 ein offenporiger Schaum verwendet, empfiehlt es sich zur Erreichung einer maximalen Energieausbeute eine wasserfeste Folie beim Ausschäumen gleich mit Aufzukaschieren, damit eine enge Verbindung zwischen der die Dampfsperre bildenden Folie und dem Isolierkern entsteht. Bei einer allenfalls später z.B. vom Dachdecker aufgelegten Folie würde sich zwischen Folie und dem Bau-Element 1 ein Luftpolster bilden, durch welches die Energieaufnahme verschlechtert würde.

Dieses Bau-Element 1 ist - wie eingangs erwähnt - hervorragend zur Dacheindeckung geeignet, wobei es sehr stabil, belastbar sowie witterungsund alterungsbeständig ist. Es übernimmt dabei gleichzeitig mehrere Aufgaben: Erstens die, welche bisher zumeist von Ziegeln mit entsprechender Unterkonstruktion erfüllt wurde. Zweitens diejenige der Wärmedämmung. Drittens, die eines hinreichend wirksamen Wärme-Nutzungssystems, wofür bisher zusätzliche Kollektoren oder ähnliche Einrichtungen erforderlich waren. Die Wärmegewinnung wird dadurch praktisch ohne Zusatzkosten erreicht Gleiches gilt bei der Verwendung des Bau-Elementes 1 als Fassadenverkleidung.

Gegenüber den ein Wasser-Glykol-Gemisch führenden Kollektoren, werden zudem einige Nachteile vermieden. Die vorliegende, Energie gewinnende Dachkonstruktion aus Bau-Elementen 1 ist erheblich leichter, wobei zusätzlich auch das Gewicht des Wasser-Glykol-Gemisches gespart wird; Luft wiegt nichts. Die Bau-Elemente 1 sind begeh- und belastbar, es können daher keine mechanischen Schäden und Undichtigkeiten auftreten. Somit entfällt das Risiko des ins Dach oder in die Hauswände auslaufenden Wasser-Glykol-Gemisches. Ebenso entfällt die Energie verbrauchende Zwischenstufe von der Luft zum Wasser. Luft ist auch problemloser, billiger und raumsparender zu speichern als Wasser. Sie kann auch komprimiert werden, wodurch sich ein höherer Wirkungsgrad der Energiegewinnung ergibt Luft kann über Wärmepumpen beliebig hoch aufgeheizt werden, während beim Wasser die Grenze bei unter 90° C liegt

Die Wärmenutzung mittels der vorliegenden Bau-Elemente 1 ist die bisher wohl billigste Art der Alternativ-Energiegewinnung, sowohl von der notwendigen Investition als auch im Betrieb.

## Patentansprüche

1. Bau-Element zur Dacheindeckung und/oder Fassadenverkleidung, welches wärmedämmend ausgebildet ist, indem es aus wärmedämmendem Material besteht oder wärmedämmendes Material enthält, wobei unterhalb seiner nach aussen zu richtenden Oberfläche (4) mindestens ein Kanal (5) verläuft, der zum Führen von Luft bestimmt ist, welcher Kanal (5) so ausgebildet ist, dass die Luft zu Heiz- und/oder Kühlzwecken abgeführt werden kann, **dadurch gekennzeichnet, dass** es Körner oder Stücke (2) aus Schaumglas aufweist, welche in einem organischen oder anorganischen Bindemittel (3) eingebettet sind.

2. Bau-Element nach Anspruch 1, **dadurch gekennzeichnet, dass** es aus einer Platte besteht.

3. Bau-Element nach Anspruch 1, **dadurch gekennzeichnet**, die Körner oder Stücke (2) aus Schaumglas in einem Bindemittel (3) eingebettet sind, dessen wesentliches Bestandteil Zement/Zementschaum oder Kunststoff/Kunststoffschaum ist

4. Bau-Element nach einem der Ansprüche 1 - 3, **dadurch gekennzeichnet, dass** die Körner oder Stücke (2) aus Schaumglas in Korn-, Splittund/oder Schotterform vorliegen.

5. Bau-Element nach einem der Ansprüche 1 - 4, **gekennzeichnet durch** eine Mehrzahl von annähernd parallel zueinander verlaufenden Kanälen (5), welche **durch** das Bau-Element (1) von einer Stirnseite (6) zur anderen (7) hindurchführen und die z.B. annähernd 2 - 15 mm unterhalb der nach aussen zu richtenden Oberfläche (4) angeordnet sind.

6. Bau-Element nach einem der Ansprüche 1 - 5, **dadurch gekennzeichnet, dass** der Kanal (5) bzw. die Kanäle (5) einen annähernd dreieckigen oder trapezförmigen Querschnitt aufweisen, z.B. mit abgerundeten Ecken, wobei eine Spitze, bzw. der schmälere der beiden parallelen Schenkel, zur Oberfläche (4) hin gerichtet ist, bzw. liegt.

7. Bau-Element nach einem der Ansprüche 1 - 6, **dadurch gekennzeichnet, dass** es als Endstück (13) ausgebildet ist, in welches die Kanäle (5) eines oder mehrerer, benachbarter Bau-Elemente (1) einzumünden bestimmt sind, wobei eine oder mehrere ins freie mündende Ansaugöffnungen vorgesehen sind, die vorzugsweise mit einem feinmaschigen Sieb oder Flies (14) geschützt sind.

8. Verfahren zur Herstellung eines Bau-Elementes nach Anspruch 1, wobei eine Form verwendet wird, in welche Körner oder Stücke (2) aus Schaumglas gegeben werden, weiche Körner oder Stücke (2) in ein Bindemittel (3) eingebettet werden, wobei im Bereich unterhalb der nach aussen zu richtenden Oberfläche (4) des Bau-Elementes (1) mindestens ein Stab oder Rohr angeordnet wird, weicher bzw. weiches nach dem Aushärten des Bindemittels (3) herausgezogen wird, wodurch unter der Oberfläche (4) des fertigen Bau-Elementes (1) ein Kanal (5) entsteht.

9. Verfahren nach Anspruch 8, **dadurch gekennzeichnet, dass** Körner oder Stücke (2) aus Schaumglas, z.B. in Korn-, Splitt- und/oder Schotterform, in die Form gegeben und verdichtet werden, worauf die Form so weit verschlossen wird, dass noch Luft entweichen kann und mittels mindestens einer in die Form hinein geführten Kanüle Bindemittel (3), z.B. PUR-Schaum, in die verbliebenen zwischenräume gepresst wird, wobei die zur Bildung der Kanäle (5) verwendeten und nach abbinden des Bindemittels (3) wieder zu entfernenden Stäbe oder Rohre mit einem Trennmittel beschichtet werden.

10. Verfahren nach Anspruch 9, **dadurch gekennzeichnet, dass** die aus Kömern oder Stücken (2) aus Schaumglas bestehende Füllung, ausgehend von deren ursprünglichem Volumen, im Verhältnis 1.3 : 1.0 verdichtet wird, wodurch am Ende 30% mehr Schaumglas in der Form ist als der eigentliche Forminhalt beträgt.

11. Verfahren nach einem der Ansprüche 8 bis 10, **dadurch gekennzeichnet, dass** die aus Körnern oder Stücken (2) aus Schaumglas bestehende Füllung so eingebracht wird, dass zu mindestens einer Aussenseite des Bau-Elementes (1) hin, z.B. bei einer Platte oben und unten, je eine Lage mit feinkörnigem Schaumglas eingefüllt wird, z.B. mit einer Komgrösse von 2 - 4 mm, mit dem Zweck, eine möglichst glatte Oberfläche des Bau-Elementes zu erzielen.

## Claims

1. Building element for roof covering and / or covering of walls, which is laid out to be thermal insulating by being made of thermal insulating material or containing thermal insulating materials, whereas below of the outside surface (4) at least one canal (5) is placed, which is intended to transport air, of which canal (5) is shaped in a way that air for heating and / or cooling purposes may be transported, distinguished by containing grains or pieces (2) of foam glass, which are embedded in an organic or inorganic binder (3).

2. Building element according to claim 1, distinguished by consisting of one tile.

3. Building element according to claim 1, distinguished by grains or pieces (2) of foam glass embedded in a binder (3), the main ingredient of which is cement/ cement foam or plastics /plastic foam.

4. Building element according to claims 1 - 3, distinguished by grains or pieces (2) of foam glass being in shape of grain, split and / or gravel.

5. Building element according to one of the claims 1 - 4, distinguished by a multitude of canals (5) approximately parallel to each other, which run through the building element (1) from one head side (6) to the opposite one (7), and which are placed approximately 2 - 15 mm below the outside surface (4).

6. Building element according to one of the claims 1-5, distinguished by the canal (5), respectively the canals (5) showing a nearly triangular or trapeze shaped cross section, e.g. with rounded angles, whereas one angle, or else the smaller of the two parallel sides is pointed to the upper surface (4).

7. Building element according to one of the claims 1 - 6, distinguished that it is shaped as end piece (13), in which the canals (5) of one or more neighbouring building elements (1) have to be lead, whereas one or more freely ending intake openings are designed, which are preferably protected by a sieve of fleece (14).

8. Procedure for the production of a building element according to claim 1, whereas a mould is used in which grains or pieces (2) of foam glass are filled in, which grains or pieces (2) are embedded in a binder (3), whereas in the area below the outside surface (4) of the building element (1) at least one rod or tube is placed, which after hardening of the binder (3) is or are withdrawn, thus creating below the surface (4) of the building element (1) a canal (5).

9. Procedure according to claim 8, distinguished by the grains or pieces (2) of foam glass, e.g. in shape of grain, split and / or gravel being filled into the mould and condensed, whereas the mould is closed so far that air can just evaporate, and in which with at least one tube inserted into the mould binder (3), e.g. PUR-foam is pressed into the hollows, whereas the rods or tubes which are used to build the canals (5) and which are removed again after the binder (3) has hardened, are covered with a separating agent.

10. Procedure according to claim 9, distinguished by the filling consisting of grains or pieces (2) of foam glass being condensed 1.3 : 1.0 in relation to the original volume, whereas at the end 30 % more foam glass is in the mould than the actual contents of the mould would hold.

11. Procedure according to one of the claims 8 to 10, distinguished that the filling consisting of grains or pieces (2) of foam glass will be put in so, that at least to one outside of the building element (1), e.g. in a tile at the top and the bottom, one layer each of fine grained foam glass is filled in, e.g. with a grain size of 2 - 4 mm, with the aim, to create a quite smooth surface of the building element.

## Revendications

1. Élément de construction pour la couverture du toit et/ou le parement de façade qui est un isolant calorifuge par sa composition ou la contenance d'une matière calorifuge. En-dessous de la surface extérieure se trouve au moins une conduite 5 pour canaliser l'air. Ce canal 5 est formé de telle façon que l'air puisse être évacué à des fins de chauffage ou de refroidissement. Il est marqué par la présence de graviers ou morceaux 2 en verre expansé qui sont insérés dans un liant 3 organique ou inorganique.

2. Élément de construction selon spécification 1 marqué par sa forme d'un panneau.

3. Élément de construction selon spécification 1 marqué par l'insertion des grains ou des morceaux 2 en verre expansé dans un liant 3, dont son composant essentiel est le ciment / ciment mousse ou matière plastique / matière plastique mousse.

4. Élément de construction selon spécification 1-3 marqué par le fait que les cailloux ou les morceaux 2 existent sous forme de grains - graviers - cailloux.

5. Élément de construction selon spécification 1 - 4 marqué par un certain nombre de canaux 5 disposés à peu près parallèlement , traversant l'élément de construction 1 d'un côté frontal 6 à l'autre 7 et qui se trouvent à environ 2 - 15 mm sous la surface extérieure.

6. Élément de construction selon l'une des spécifications 1 - 5 marqué par le fait que le canal 5 resp. les canaux 5 possèdent une section presque triangulaire ou trapézoïdale avec des arêtes arrondies. Une arête ou le front le plus court de deux est dirigés vers la face extérieure.

7. Élément de construction selon l'une des spécifications 1 - 6 marqué par le fait qu'il est conçu comme élément d'extrémité 13 dans lequel débouchent les canaux 5 d'un ou plusieurs éléments de construction 1 voisins. Le ou les ouvertures vers l'extérieur sont protégées préferablement par un tamis ou un toison 14;

8. Procédé de fabrication d'un élément de construction 1 spécification 1 en utilisant un moule dans lequel sont versés des grains ou morceaux 2 en verre expansé. Ces grains ou morceaux 2 en verre expansé sont insérés dans un liant 3. En-dessous de la face extérieure d'élément de construction 1 se trouve au moins une tige ou un tube qui sera extrait après le durcissement du liant 3, créant un canal 5 sous la surface de l'élément de construction 1 fini.

9. Procédé selon spécification 8 marqué par le fait que les grains ou morceaux 2 en verre expansé - par ex. sous forme de grain, gravillon et/ou cailloux-seront versés dans le moule et compressés. Le moule sera fermé d'une manière pour laisser s'échapper l'air. Un liant 3 par ex. mousse polyuréthane, sera pressée dans les interstices restants par des canules fichées dans le moule. Les tiges ou tubes utilisés pour la confection des canaux et qui seront enlevés après la prise du liant doivent être enduits avec un agent séparateur.

10. Procédé selon revendication 9 marqué par la compression du remplissage initiale en grains ou morceaux 2 en verre expansé dans une relation 1,3 à 1,0. A la fin il y a donc 30% de plus en verre expansé dans le moule que son propre volume.

11. Procédé selon l'une des revendications 8 - 10, marqué par le fait que le remplissage composé de grains ou morceaux 2 en verre expansé possède dans le cas d'un élément de construction 1 au moins une face extérieure, pour un panneau par. ex. en haut et en bas, une couche de grains fins de verre expansé d'un calibre 2 - 4 mm, ceci pour obtenir la surface la plus lisse possible de l'élément de construction 1.
